# EUROPÄISCHE PATENTSCHRIFT

(11) **EP 4 363 821 B1**
(45) Veröffentlichungstag und Bekanntmachung des Hinweises auf die Patenterteilung: **29.04.2026**
(21) Anmeldenummer: 22734960.2
(22) Anmeldetag: 23.06.2022
(51) Int. Cl.: G01M 11/02

(54) **VORRICHTUNG ZUR ABBILDUNG DURCH EIN ZU PRÜFENDES OPTISCHES SYSTEM UND SYSTEM SOWIE VERFAHREN ZUM PRÜFEN EINES OPTISCHEN SYSTEMS**
DEVICE FOR IMAGING THROUGH AN OPTICAL SYSTEM TO BE TESTED, AND SYSTEM AND METHOD FOR TESTING AN OPTICAL SYSTEM
DISPOSITIF POUR L'IMAGERIE PAR UN SYSTÈME OPTIQUE À TESTER, AINSI QUE SYSTÈME ET PROCÉDÉ DE TEST D'UN SYSTÈME OPTIQUE

(30) Priorität: 28.06.2021 DE 202021103431 U
(43) Veröffentlichungstag der Anmeldung: 08.05.2024
(73) Patentinhaber: Trioptics GmbH, 22880 Wedel (DE)
(72) Erfinder: RUPRECHT, Aiko, 22880 Wedel (DE); KREY, Stefan, 22880 Wedel (DE)
(74) Vertreter: Waldauf, Alexander
(86) Internationale Anmeldenummer: PCT/EP2022/067111
(87) Internationale Veröffentlichungsnummer: WO 2023/274822

(56) Entgegenhaltungen:
- WO-A2-01/63233
- DE-A1- 10 154 125
- DE-A1- 102004 053 685
- JP-A- S5 640 739
- US-A- 4 828 385
- US-A- 5 424 552

## Beschreibung

Die Erfindung betrifft eine Vorrichtung zur Abbildung durch ein zu prüfendes optisches System und ein Prüfsystem sowie ein Verfahren zum Prüfen eines optischen Systems.

Zur Messung einer Abbildungsqualität eines optischen Systems anhand einer Modulationsübertragungsfunktion kann beispielsweise ein Objekt über das zu prüfende optische System auf einen Sensor abgebildet werden und kann eine Berechnung der Modulationsübertragungsfunktion aus einer vom Sensor empfangenen Intensitätsverteilung erfolgen. Eine aufgrund einer häufig nicht rotationssymmetrischen Fokusform durchgeführte, zweidimensionale Messung der Modulationsübertragungsfunktion unter Verwendung einer herkömmlichen Teststruktur kann jedoch üblicherweise mit erhöhtem Sensorrauschen einhergehen. Herkömmliche Teststrukturen umfassen beispielsweise ein so genanntes Slit-Reticle bzw. eine schlitzförmige Teststruktur, ein sogenanntes Cross-Reticle bzw. eine kreuzförmige Teststruktur, ein sogenanntes Pinhole-Reticle bzw. eine punktförmige Teststruktur oder ein sogenanntes H-Reticle bzw. eine H-förmige Teststruktur.

Die DE 101 54 125 A1 betrifft ein Messverfahren und Messsystem zur Vermessung der Abbildungsqualität eines optischen Abbildungssystems, wobei ein Interferometer verwendet wird, das vom Prüfling abgebildete Muster in dessen Objektebene liegt und von einem Monitor erzeugt wird.

Die US 5 424 552 A beschreibt ein Projektionsbelichtungssystem für die Bearbeitung eines Wafers, mit einer Möglichkeit zur Anpassung der Fokuslage des optischen Systems durch Einstellen eines Abstandes zwischen der Maske und einer teildurchlässigen Platte samt Detektion des teiltransmittierten Lichts, und zeigt ferner austauschbare Aperturblenden.

Die WO 01/63233 A2 betrifft eine Vorrichtung zur Wellenfronterfassung, mit einem Interferometer, bei dem eine Lochmaske, welche auch als Wellenfrontquelle bezeichnet ist, über ein zu prüfendes System auf ein Gitter abgebildet wird, wobei eine Messung interferometrisch erfolgt.

Die JP S56 40739 A stellt ein ringförmiges Testmuster zur MTF-Messung dar, wobei kreisförmig angeordnete Strichmuster vorgesehen sind, welche bei Rotation des Testobjektes von Detektoren erfasst werden. Die Streifenmuster haben dabei definierte Raumfrequenzen. Weiterhin werden longitudinale Querschnitte an vordefinierten Detektorpositionen ausgewertet.

Die US 4 828 385 A betrifft eine Vorrichtung zur Messung der Brechkraft einer Linse, wobei eine ringförmige Maske in den Strahlengang platziert wird, die als eine Strahlbegrenzung dient und mit der eine ringförmige Zylinderlinse fest verbunden ist.

Vor diesem Hintergrund werden mit dem hier vorgestellten Ansatz ein verbessertes Prüfsystem zum Prüfen eines optischen Systems nach Anspruch 1 und ein verbessertes Verfahren zum Prüfen eines optischen Systems nach Anspruch 6 ermöglicht. Vorteilhafte Ausgestaltungen und Weiterbildungen der Erfindung ergeben sich aus den nachfolgenden Unteransprüchen.

Gemäß Ausführungsformen kann insbesondere eine Vorrichtung zur Abbildung durch ein zu prüfendes optisches System oder, anders ausgedrückt, eine Teststruktur zur Messung einer Abbildungsqualität eines optischen Systems anhand einer Modulationsübertragungsfunktion, Kontrastübertragungsfunktion oder auch Modulationstransferfunktion (MTF = Modulation Transfer Function) bereitgestellt werden. Die Vorrichtung oder Teststruktur weist eine geometrisch ringförmige Ausgestaltung auf. Die Vorrichtung kann eine zweidimensionale, richtungsabhängige Messerung der MTF innerhalb der Bildebene bei gleichzeitig hoher Ausleuchtung eines Sensors zur Bilderfassung ermöglichen.

Somit kann insbesondere auf vorteilhafte Weise durch eine hierin vorgeschlagene Vorrichtung oder Teststruktur aufgrund von deren geometrisch ringförmiger Ausgestaltung eine zweidimensionale MTF-Messung ermöglicht werden. Auch kann beispielsweise eine Lichttransmission analog zu einem Kreuz-Reticle oder einer kreuzförmigen Teststruktur erreicht werden. Insbesondere können somit Vorteile von herkömmlichen Teststrukturen auf eine neuartige Weise kombiniert und bisherige Nachteile überwunden werden. Ein weiterer Vorteil einer ringförmigen Teststruktur kann insbesondere darin bestehen, dass zusätzlich zu einer zweidimensionalen MTF-Messung auch eine Messung der effektiven Brennweite (EFL = Effective Focal Length) ermöglicht wird.

Es wird ein Prüfsystem zum Prüfen eines optischen Systems nach Anspruch 1 vorgestellt.

Das optische System kann zumindest eine Linse oder ein anderes optisches Element aufweisen. Die Vorrichtung kann als eine Platte, Scheibe oder dergleichen ausgeformt sein. Dabei kann die Vorrichtung eine rechteckige Umfangskontur oder eine gekrümmte Umfangskontur aufweisen. Die Vorrichtung kann auch als eine ringförmige Teststruktur, als ein Ring-Reticle oder eine Strichplatte mit ringförmiger Struktur bezeichnet werden. Bei den elektromagnetischen Wellen kann es sich um Licht sichtbaren Spektrum oder andere elektromagnetische Strahlung handeln.

Gemäß einer Ausführungsform kann der zweite Vorrichtungsabschnitt ringförmig ausgeformt sein. Hierbei kann der zweite Vorrichtungsabschnitt zwischen einem ersten Teilbereich und einem zweiten Teilbereich des ersten Vorrichtungsabschnitts angeordnet sein. Anders ausgedrückt kann der zweite Vorrichtungsabschnitt zwischen dem ersten Teilbereich und dem zweiten Teilbereich des ersten Vorrichtungsabschnitts eingebettet sein. Beispielsweise kann optional zusätzlich der erste Teilbereich des ersten Vorrichtungsabschnitts ringförmig ausgeformt sein und den zweiten Vorrichtungsabschnitt umgeben. Der zweite Teilbereich des ersten Vorrichtungsabschnitts kann kreisförmig ausgeformt und von dem zweiten Vorrichtungsabschnitt umgeben sein.

Gemäß einer anderen Ausführungsform kann der erste Vorrichtungsabschnitt zwischen einem ersten Teilbereich und einem zweiten Teilbereich des zweiten Vorrichtungsabschnitts angeordnet sein. Anders ausgedrückt kann der erste Vorrichtungsabschnitt zwischen dem ersten Teilbereich und dem zweiten Teilbereich des zweiten Vorrichtungsabschnitts eingebettet sein. Beispielsweise kann optional zusätzlich der erste Teilbereich des zweiten Vorrichtungsabschnitts ringförmig ausgeformt sein und den ersten Vorrichtungsabschnitt umgeben. Der zweite Teilbereich des zweiten Vorrichtungsabschnitts kann kreisförmig ausgeformt und von dem ersten Vorrichtungsabschnitt umgeben sein.

Laut Erfindung ist einer der ringförmig ausgeformten Vorrichtungsabschnitte als ein Schlitz oder Ringspalt ausgeformt. Beispielsweise kann der zweite Vorrichtungsabschnitt als ein Schlitz oder Ringspalt ausgeformt sein.

Auch ist die Auswerteeinrichtung ausgebildet, um unter Verwendung der von dem zu prüfenden optischen System erzeugten Abbildung der Vorrichtung eine zweidimensional gemessene Modulationsübertragungsfunktion des optischen Systems als das Auswerteergebnis zu bestimmen. Hierbei kann die Auswerteeinrichtung ausgebildet sein, um das Auswerteergebnis unter Verwendung einer Fourier-Transformation zu bestimmen.

Ferner kann die Auswerteeinrichtung ausgebildet sein, um unter Verwendung der von dem zu prüfenden optischen System erzeugten Abbildung der Vorrichtung eine effektive Brennweite und zusätzlich oder alternativ eine richtungsabhängige Vergrößerungsfähigkeit des optischen Systems als das Auswerteergebnis zu bestimmen. Unter Verwendung der Vorrichtung kann die Auswerteeinrichtung ausgebildet sein, um eine Brennweitenmessung für verschiedene Orientierungen durchzuführen und somit zusätzliche optische Größen wie Verzeichnung oder anamorphotische Abbildungen zu bestimmen, wobei auch eine Orientierung z. B. der Verzeichnung bestimmt werden kann.

Es wird zudem ein Verfahren zum Prüfen eines optischen Systems vorgestellt, wobei das Verfahren unter Verwendung einer Ausführungsform eines hierin genannten Prüfsystems ausführbar ist, wobei das Verfahren folgende Schritte aufweist:
Erzeugen einer Abbildung der Vorrichtung mittels des zu prüfenden optischen Systems; und
Auswerten der Abbildung der Vorrichtung, um zum Prüfen des optischen Systems ein Auswerteergebnis zu bestimmen.

Das Verfahren zum Prüfen kann unter Verwendung von und/oder in Verbindung mit einer Ausführungsform eines hierin genannten Prüfsystems ausführbar sein. Dabei kann der Schritt des Auswertens durch eine Auswerteeinrichtung des Prüfsystems ausführbar sein.

Das Auswerteergebnis kann zumindest einen Parameter für eine Abbildungsqualität des optischen Systems aufweisen oder repräsentieren.

Gemäß einer Ausführungsform kann im Schritt des Auswertens unter Verwendung der Abbildung der Vorrichtung eine zweidimensional gemessene Modulationsübertragungsfunktion des optischen Systems als das Auswerteergebnis bestimmt werden. So kann eine genaue und aussagekräftige Prüfung des optischen Systems durchgeführt werden.

Dabei kann im Schritt des Auswertens die zweidimensional gemessene Modulationsübertragungsfunktion aus einer Punktspreizfunktion des optischen Systems ermittelt werden, insbesondere mittels einer Fourier-Transformation. Hierbei kann die Punktspreizfunktion aus einer Mehrzahl von in unterschiedlichen Querschnittsebenen erhaltenen Linienspreizfunktionen des optischen Systems mathematisch bestimmt werden.

Auch kann oder können im Schritt des Auswertens unter Verwendung der Abbildung der Vorrichtung eine effektive Brennweite und zusätzlich oder alternativ eine richtungsabhängige Vergrößerungsfähigkeit des optischen Systems als das Auswerteergebnis bestimmt werden. Ferner kann eine Energie auf einer kreisförmigen oder quadratischen Fläche als das Auswerteergebnis bestimmt werden. Das Auswerteergebnis kann auf Grundlage der zweidimensional gemessenen Modulationsübertragungsfunktion oder der Punktspreizfunktion bestimmt werden. Somit kann eine Brennweitenmessung für verschiedene Orientierungen durchgeführt werden und können zusätzliche optische Größen wie Verzeichnung oder anamorphotische Abbildungen bestimmt werden, wobei auch eine Orientierung z. B. der Verzeichnung bestimmt werden kann.

Ein Ausführungsbeispiel der Erfindung ist in den Zeichnungen rein schematisch dargestellt und wird nachfolgend näher beschrieben. Es zeigt
Fig. 1 eine schematische Darstellung eines Ausführungsbeispiels einer Vorrichtung zur Abbildung durch ein zu prüfendes optisches System;
Fig. 2 eine schematische Darstellung eines Ausführungsbeispiels einer Vorrichtung zur Abbildung durch ein zu prüfendes optisches System;
Fig. 3 eine schematische Darstellung eines Ausführungsbeispiels eines Prüfsystems zum Prüfen eines optischen Systems;
Fig. 4 eine schematische Darstellung von Ebenen eines optischen Systems;
Fig. 5 eine schematische Darstellung eines Ausführungsbeispiels eines Prüfsystems zum Prüfen eines optischen Systems; und
Fig. 6 ein Ablaufdiagramm eines Ausführungsbeispiels eines Verfahrens zum Prüfen eines optischen Systems.

In der nachfolgenden Beschreibung günstiger Ausführungsbeispiele der vorliegenden Erfindung, werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

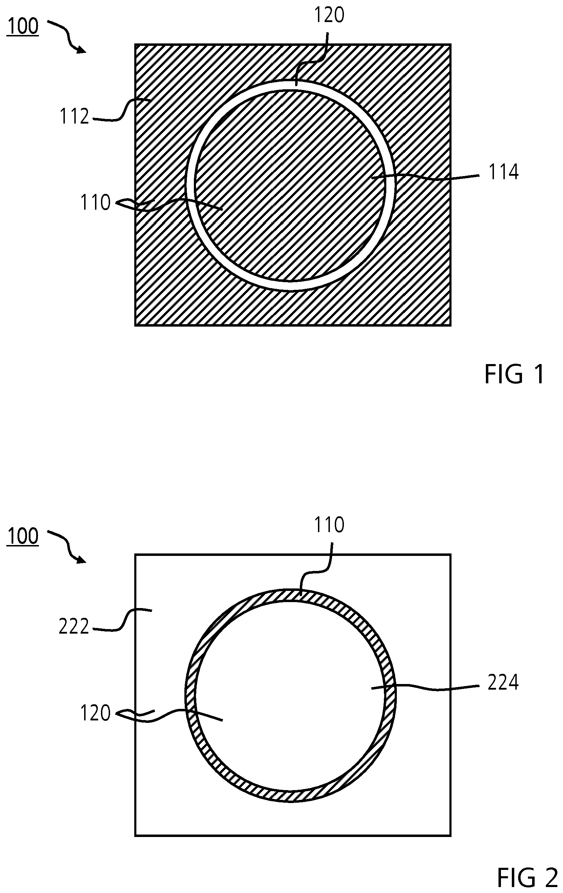

Fig. 1 zeigt eine schematische Darstellung eines Ausführungsbeispiels einer Vorrichtung 100 zur Abbildung durch ein zu prüfendes optisches System. Die Vorrichtung 100 ist als eine ringförmige Teststruktur, als ein Ring-Reticle bzw. als eine Strichplatte mit ringförmiger Struktur ausgeführt. Die Vorrichtung 100 bzw. Teststruktur umfasst einen ersten Vorrichtungsabschnitt 110 mit einem ersten Transmissionsgrad für elektromagnetische Wellen und einen zweiten Vorrichtungsabschnitt 120 mit einem zweiten Transmissionsgrad für die elektromagnetischen Wellen. Der zweite Transmissionsgrad ist höher als der erste Transmissionsgrad. Somit weist der zweite Vorrichtungsabschnitt 120 einen höheren Transmissionsgrad als der erste Vorrichtungsabschnitt 110 auf. Zumindest einer der Vorrichtungsabschnitte 110, 120 ist ringförmig ausgeformt. Insbesondere ist ein ringförmig ausgeformter der Vorrichtungsabschnitte 110, 120 als ein Schlitz oder Ringspalt ausgeformt.

Gemäß dem in Fig. 1 dargestellten Ausführungsbeispiel ist der zweite Vorrichtungsabschnitt 120 ringförmig ausgeformt. Dabei ist der zweite Vorrichtungsabschnitt 120 zwischen einem ersten Teilbereich 112 und einem zweiten Teilbereich 114 des ersten Vorrichtungsabschnitts 110 angeordnet bzw. eingebettet. Anders ausgedrückt ist der erste Vorrichtungsabschnitt 110 durch den zweiten Vorrichtungsabschnitt 120 in den ersten Teilbereich 112 und den zweiten Teilbereich 114 unterteilt.

Fig. 2 zeigt eine schematische Darstellung eines Ausführungsbeispiels einer Vorrichtung 100 zur Abbildung durch ein zu prüfendes optisches System. Die Vorrichtung in Fig. 2 entspricht der Vorrichtung aus Fig. 1 mit Ausnahme dessen, dass gemäß dem in Fig. 2 dargestellten Ausführungsbeispiel der erste Vorrichtungsabschnitt 110 ringförmig ausgeformt ist. Dabei ist der erste Vorrichtungsabschnitt 110 zwischen einem ersten Teilbereich 222 und einem zweiten Teilbereich 224 des zweiten Vorrichtungsabschnitts 120 angeordnet.

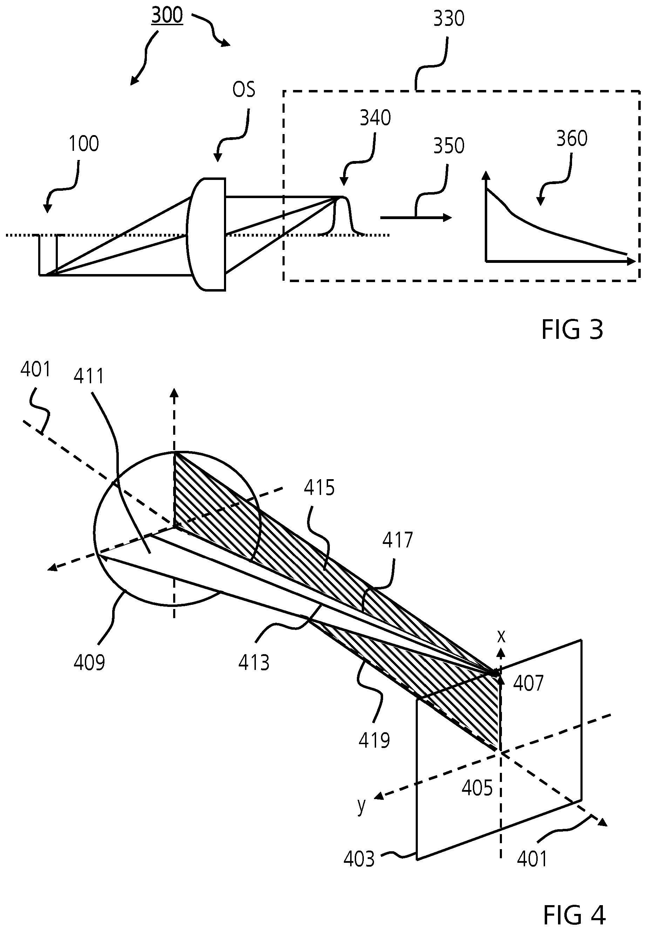

Fig. 3 zeigt eine schematische Darstellung eines Ausführungsbeispiels eines Prüfsystems 300 zum Prüfen eines optischen Systems OS. Das optische System OS ist in der Darstellung lediglich beispielhaft durch eine Linse veranschaulicht. Das Prüfsystem 300 umfasst eine Vorrichtung 100 zur Abbildung durch das zu prüfende optisches System OS und eine Auswerteeinrichtung 330. Die Vorrichtung 100 entspricht oder ähnelt der Vorrichtung aus einer der vorstehend beschriebenen Figuren. Die Auswerteeinrichtung 330 ist ausgebildet, um eine von dem zu prüfenden optischen System erzeugte Abbildung 340 der Vorrichtung 100 auszuwerten, um zum Prüfen des optischen Systems OS ein Auswerteergebnis 360 zu bestimmen. Dazu kann die Auswerteeinrichtung 330 einen optischen Sensor oder eine Schnittstelle zu einem optischen Sensor zum Erfassen der Abbildung 340 und zumindest eine Bestimmungseinheit aufweisen.

Die Auswerteeinrichtung 330 ist gemäß einem Ausführungsbeispiel ausgebildet, um unter Verwendung der von dem zu prüfenden optischen System OS erzeugten Abbildung 340 der Vorrichtung 100 eine zweidimensional gemessene Modulationsübertragungsfunktion des optischen Systems als das Auswerteergebnis 360 zu bestimmen. Eine Bestimmung des Auswerteergebnisses 360 aus der Abbildung 340 erfolgt beispielsweise mittels einer Fourier-Transformation 350. Optional zusätzlich ist die Auswerteeinrichtung 330 ausgebildet, um unter Verwendung der von dem zu prüfenden optischen System OS erzeugten Abbildung 340 der Vorrichtung 100 eine effektive Brennweite und/oder eine richtungsabhängige Vergrößerungsfähigkeit des optischen Systems OS als das Auswerteergebnis 360 zu bestimmen.

Fig. 4 zeigt eine schematische Darstellung von Ebenen eines optischen Systems. Das optische System entspricht oder ähnelt dem unter Bezugnahme auf eine der vorstehend beschriebenen Figuren erwähnten optischen System. Gezeigt sind eine optische Achse 401, eine durch zwei Achsen x und y definierte Bildebene 403 mit einem Achsenpunkt 405 und einem Feldpunkt 407, eine Austrittspupille 409 des optischen Systems bzw. einer Linse, eine Sagittalebene 411 mit einem sich entlang derselben erstreckenden Sagittalstrahl 413, eine Tangentialebene 415 bzw. Meridionalebene, ein Hauptstrahl 417 und ein Achsenstrahl 419.

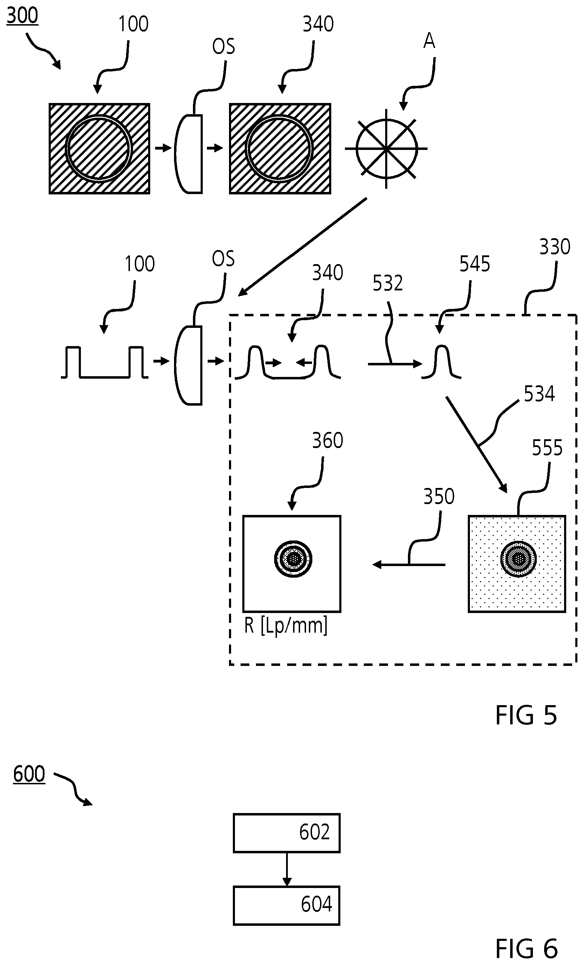

Fig. 5 zeigt eine schematische Darstellung eines Ausführungsbeispiels eines Prüfsystems 300 zum Prüfen eines optischen Systems OS. Das Prüfsystem 300 entspricht oder ähnelt hierbei dem Prüfsystem aus Fig. 3. Das Prüfsystem 300 umfasst die durch das zu prüfende optische System OS abzubildende Vorrichtung 100 und die Auswerteeinrichtung 330. Die Auswerteeinrichtung 330 ist ausgebildet, um die von dem zu prüfenden optischen System erzeugte Abbildung 340 der Vorrichtung 100 auszuwerten, um zum Prüfen des optischen Systems OS ein Auswerteergebnis 360 zu bestimmen.

Die Vorrichtung 100 ist in der Darstellung sowohl lediglich beispielhaft als die Vorrichtung aus Fig. 1 als auch in Gestalt ihres Objektkontrastes veranschaulicht. Die Abbildung 340 der Vorrichtung 100 ist in der Darstellung sowohl als Bild der Vorrichtung 100 als auch in Gestalt ihres Bildkontrastes veranschaulicht, der durch zwei einzelne Linienspreizfunktionen dargestellt ist. Das optische System OS ist in der Darstellung lediglich beispielhaft durch jeweils eine Linse zwischen der Vorrichtung 100 und der Abbildung 340, somit auch zwischen dem Objektkontrast und dem Bildkontrast, veranschaulicht. In der Darstellung von Fig. 5 ist ferner eine beispielhafte Querschnittsebene A für Radialschnitte durch die Vorrichtung 100 eingezeichnet. Dabei ergeben sich der Objektkontrast und der Bildkontrast entsprechend einem Radialschnitt für eine solche Querschnittsebene A.

Die Auswerteeinrichtung 330 ist gemäß dem hier dargestellten Ausführungsbeispiel ausgebildet, um unter Verwendung der von dem zu prüfenden optischen System OS erzeugten Abbildung 340 der Vorrichtung 100 eine zweidimensional gemessene Modulationsübertragungsfunktion des optischen Systems als das Auswerteergebnis 360 zu bestimmen. Die Modulationsübertragungsfunktion gibt hierbei an, welcher Kontrast (bzw. welche Modulation) in Abhängigkeit von der Raumfrequenz R, dargestellt in Linienpaaren pro Millimeter (Ip/mm), vom optischen System (OS) übertragen werden kann. Dabei ist die Auswerteeinrichtung 330 ausgebildet, um die zweidimensional gemessene Modulationsübertragungsfunktion, d.h. hier das Auswerteergebnis 360, aus einer Punktspreizfunktion 555 des optischen Systems OS zu ermitteln, insbesondere mittels einer Fourier-Transformation 350. Die Auswerteeinrichtung 330 ist hierbei ausgebildet, um die Punktspreizfunktion 555 aus einer Mehrzahl von in unterschiedlichen Querschnittsebenen A erhaltenen Linienspreizfunktionen 545 des optischen Systems OS mathematisch zu bestimmen. Dazu ist die Auswerteeinrichtung 330 ausgebildet, um die einzelnen Linienspreizfunktionen eines Radialschnittes in einer ersten Überlagerung 532 bzw. Mittelung zu einer überlagerten Linienspreizfunktion 545 zu überlagern und dies mit mehreren Radialschnitten für mindestens eine weitere Querschnittsebene A zu wiederholen, um durch eine zweite Überlagerung 534 bzw. Mittelung die Punktspreizfunktion 555 zu generieren.

Fig. 6 zeigt ein Ablaufdiagramm eines Ausführungsbeispiels eines Verfahrens 600 zum Prüfen eines optischen Systems. Das Verfahren 600 zum Prüfen ist in Verbindung mit und/oder unter Verwendung von dem Prüfsystem aus einer der vorstehend beschriebenen Figuren oder einem ähnlichen Prüfsystem ausführbar. Das Verfahren 600 zum Prüfen umfasst einen Schritt 602 des Erzeugens und einen Schritt 604 des Auswertens. In dem Schritt 602 des Erzeugens wird mittels des zu prüfenden optischen Systems eine Abbildung der Vorrichtung erzeugt. In dem Schritt 604 des Auswertens wird die Abbildung der Vorrichtung ausgewertet, um zum Prüfen des optischen Systems ein Auswerteergebnis zu bestimmen.

Nachfolgend werden Ausführungsbeispiele sowie Grundlagen und Vorteile von Ausführungsbeispielen nochmals zusammenfassend und mit anderen Worten erläutert und/oder kurz vorgestellt.

Es wird insbesondere eine als ringförmige Teststruktur zur richtungsabhängigen MTF-Messung ausgeführte Vorrichtung 100 zur Abbildung durch ein zu prüfendes optisches System OS vorgestellt. Insbesondere ist die Vorrichtung 100 als eine Teststruktur zur Abbildung durch ein zu prüfendes optisches System OS zwecks Messung der Modulationstransferfunktion (MTF) und/oder der effektiven Brennweite und/oder der richtungsabhängigen Vergrößerungsfähigkeit des optischen Systems OS ausgeführt. Die Teststruktur bzw. Vorrichtung 100 umfasst einen Bereich mit hoher Lichttransmission, den zweiten Vorrichtungsabschnitt 120, und einen Bereich mit niedriger Lichttransmission, den ersten Vorrichtungsabschnitt 110, wobei einer der Bereiche eine geometrisch ringförmige Struktur aufweist. Ferner wird ein Prüfsystem 300 zum Prüfen eines optischen Systems OS vorgestellt. Unter Verwendung des Prüfsystems 300 und insbesondere der Auswerteeinrichtung 330 ist auch ein Verfahren zur Ermittlung der effektiven Brennweite und/oder der richtungsabhängigen Vergrößerung bzw. der richtungsabhängigen MTF des optischen Systems OS unter Verwendung der Teststruktur bzw. Vorrichtung 100, wobei eine vom zu prüfenden, optischen System OS erzeugte Abbildung 340 der Teststruktur bzw. Vorrichtung 100 ausgewertet wird.

Grundlagen einer Messung bzw. Bestimmung einer Abbildungsqualität eines optischen Systems OS anhand der MTF sind nachfolgend erläutert. Das grundlegende Messverfahren lässt sich auch anhand von Fig. 3 schematisch darstellen. Dabei wird ein Objekt, hier die Teststruktur bzw. Vorrichtung 100, über das zu prüfende optische System OS auf einen Sensor abgebildet und es erfolgt die MTF-Berechnung aus der vom Sensor empfangenen Intensitätsverteilung bzw. Abbildung 340. Damit die MTF über einen großen Bereich an Raumfrequenzen bestimmt werden kann, empfiehlt es sich einen schmalen Spalt als Objekt zu verwenden, wie den ringförmigen Spalt der Vorrichtung 100. Eine Abbildung einer geraden Linie liefert beispielsweise eine Intensitätsverteilung, welche naheliegenderweise als Linienspreizfunktion (LSF = Line Spread Function) bezeichnet wird. Mithilfe der Fourier-Transformation erhält man aus der LSF schließlich die MTF des Prüflings. Aufgrund der Tatsache, dass die Fokusform eines optischen Systems OS häufig nicht rotationssymmetrisch ist, ist es von Vorteil, die Abbildungsleistung in mehreren Orientierungen zu messen. Dies kann gemäß Ausführungsbeispielen einfach und in beliebig vielen Orientierungen ermöglicht werden. Eine herkömmliche Vorgehensweise besteht jedoch darin, zwei Richtungen entsprechend der Sagittalebene 411 sowie der Tangentialebene 415 zu orientieren, wie sie in Fig. 4 gezeigt sind. Die einfachste Variante dafür wäre die Verwendung eines Kreuzes als Testobjekt. Allerdings kann im Gegensatz zu der Vorrichtung 100 bei der Verwendung eines Schlitzes oder Kreuzes als Testobjekt die Messung der MTF ausschließlich eindimensional senkrecht zum jeweiligen Spalt erfolgen. Eine Abbildungsleistung in andere Orientierungen kann damit nicht ermittelt werden. Für eine zweidimensionale MTF-Messung, in der jegliche Richtung enthalten sein kann, wird herkömmlicherweise eine punktförmige Teststruktur (Pinhole-Reticle) verwendet. Eine Intensitätsverteilung in der Abbildung einer solchen punktförmigen Teststruktur wird als Punktantwort, Punktbildfunktion, Punktverteilungsfunktion oder Punktspreizfunktion (PSF = Point Spread Function) bezeichnet. Bei einer punktförmigen Teststruktur kann im Gegensatz zu der Vorrichtung 100 eine auf dem Sensor auftreffende Lichtmenge gering sein, wodurch ein Rauschen des Sensors als mögliche Fehlerquelle verstärkt sein kann. Eine Vergrößerung einer punktförmigen Teststruktur würde beispielsweise zu einer Reduktion der in der Messung verwendbaren Ortsfrequenzen führen.

Ein Vorteil bei der Verwendung der Vorrichtung 100 bzw. ringförmigen Teststruktur gemäß Ausführungsbeispielen besteht darin, dass neben einer zweidimensionalen MTF-Messung auch eine Messung der effektiven Brennweite (EFL = Effective Focal Length) ermöglicht wird. Herkömmlicherweise würde zu diesem Zweck ein modifiziertes Kreuz-Reticle verwendet. Ein Beispiel wäre die Verwendung eines H-Reticle. Aus dem Linienabstand im Bild kann über die Vergrößerung auf die Brennweite geschlossen werden. Mit der Teststruktur bzw. Vorrichtung 100 jedoch kann auch eine Brennweitenmessung für verschiedene Orientierungen durchgeführt werden und es können somit zusätzliche optische Größen wie Verzeichnung oder anamorphotische Abbildungen bestimmt werden. Vorteilhaft daran ist, dass auch die Orientierung z. B. der Verzeichnung bestimmt werden kann.

Das Verfahren 600 zum Prüfen kann auch als ein Verfahren zur Bestimmung eines Parameters für die Abbildungsqualität eines optischen Systems OS unter Verwendung der Abbildung 340 bzw. Vorrichtung der Teststruktur 100 betrachtet werden. Eine Variante eines derartigen Auswertungsverfahrens ist die Berechnung einer Punktspreizfunktion 555 bzw. Punktbildfunktion (PSF) aus der Abbildung 340 der Teststruktur bzw. Vorrichtung 100. Anders ausgedrückt ist gemäß Ausführungsbeispielen eine Verwendung des Ring-Reticles bzw. eine Betriebsweise der Vorrichtung 100 für die Bestimmung einer Punktspreizfunktion 555 bzw. Punktbildfunktion (PSF) vorgesehen, mit deren Hilfe sich Abbildungsparameter eines optischen Systems OS ermitteln lassen.

Fig. 5 zeigt schematisch, wie mithilfe der Abbildung 340 des Ring-Reticles bzw. der Vorrichtung 100 eine Punktspreizfunktion 555 (PSF, Point Spread Function) bestimmt wird, aus welcher wiederum z. B. eine zweidimensionale MTF als Auswerteergebnis 360 ermittelt wird. Wie in der Fig. 5 zu sehen ist, erzeugt das zu prüfende optische System 100, welches vereinfacht als einzelne Linse dargestellt ist, ein unscharfes Bild der Ringstruktur als Abbildung 340. In einer beliebigen Querschnittsebene A der Ringstruktur ist sowohl der Objektkontrast als auch der durch die Abbildung erzeugte Bildkontrast erkennbar. Der Bildkontrast weist dabei eine, durch die Linse verursachte, Unschärfe auf, welche durch die abgerundeten Kanten in der Intensitätsverteilung dargestellt ist. Die Intensitätsverteilung in einer Querschnittsebene A, z. B. der Sagittalebene, weist dabei aufgrund der Abbildung einer Ringstruktur, d.h. der Vorrichtung 100, zwei getrennte Linienbildfunktionen (LSF) auf, welche zwecks Vereinfachung als linke bzw. rechte LSF bezeichnet werden. Aus den beiden einzelnen Linienbildfunktionen wird nun mathematisch, z. B. durch Bildung eines Mittelwertes, eine resultierende LSF 545 berechnet. Durch Wiederholen dieses Vorgangs für eine Vielzahl von Querschnittsebenen A durch die Ringstruktur werden mehrere, überlagerte LSF 545 bestimmt, welche wiederum zu einer PSF 555, welche die zweidimensionale Intensitätsverteilung eines Punktes in der Bildebene beschreibt, kombiniert werden. Da es sich strenggenommen nicht um eine gemessene, sondern berechnete PSF 555 handelt, kann diese auch als "Pseudo"-PSF bezeichnet werden. Aus dieser Pseudo-PSF bzw. der Punktspreizfunktion 555 wird auf bekanntem Wege, hier beispielsweise mithilfe einer Fouriertransformation 350 die zweidimensionale MTF des zu messenden bzw. zu prüfenden optischen Systems OS bestimmt. Es können auch weitere Abbildungsparameter des optischen Systems OS mithilfe der PSF 555 bestimmt werden, wie z. B. die auch Encircled bzw. Ensquared Energy genannte Energie auf einer kreisförmigen bzw. quadratischen Fläche.

Die Verwendung der Ringstruktur bzw. Vorrichtung 100 bietet insbesondere gegenüber der Verwendung eines Pinholes den Vorteil, dass eine große Anzahl an Pixeln in der Sensorebene ausgeleuchtet wird, wodurch störende Moiré-Effekte kompensiert werden können. Zudem steht bei der Verwendung des Ring Reticles bzw. der Vorrichtung 100 eine höhere Lichtmenge zur Verfügung als bei der Verwendung eines herkömmlichen Pinholes. Ein weiterer Vorteil der Ringstruktur bzw. Vorrichtung 100 besteht darin, dass der Vergrößerungsfaktor der zu messenden Optik beziehungsweise des zu prüfenden optischen Systems OS leicht bestimmt werden kann.

## Patentansprüche

1. Prüfsystem (300) zum Prüfen eines optischen Systems (OS), wobei das Prüfsystem (300) folgende Merkmale aufweist:
eine Vorrichtung (100) zur Abbildung durch das zu prüfende optische System (OS), wobei die Vorrichtung (100) einen ersten Vorrichtungsabschnitt (110) mit einem ersten Transmissionsgrad für elektromagnetische Wellen und einen zweiten Vorrichtungsabschnitt (120) mit einem zweiten Transmissionsgrad für die elektromagnetischen Wellen aufweist, wobei der zweite Transmissionsgrad höher als der erste Transmissionsgrad ist, wobei zumindest einer der Vorrichtungsabschnitte (110, 120) ringförmig ausgeformt ist; und
eine Auswerteeinrichtung (330),
**dadurch gekennzeichnet, dass**
einer der ringförmig ausgeformten Vorrichtungsabschnitte (110, 120) als ein Schlitz oder Ringspalt ausgeformt ist, wobei die Auswerteeinrichtung (330) ausgebildet ist, um eine von dem zu prüfenden optischen System (OS) erzeugte Abbildung (340) der gesamten Vorrichtung (100) auszuwerten, um zum Prüfen des optischen Systems (OS) ein Auswerteergebnis (360) zu bestimmen.

2. Prüfsystem (300) gemäß Anspruch 1, **dadurch gekennzeichnet, dass** der zweite Vorrichtungsabschnitt (120) ringförmig ausgeformt ist, wobei der zweite Vorrichtungsabschnitt (120) zwischen einem ersten Teilbereich (112) und einem zweiten Teilbereich (114) des ersten Vorrichtungsabschnitts (110) angeordnet ist.

3. Prüfsystem (300) gemäß Anspruch 1, **dadurch gekennzeichnet, dass** der erste Vorrichtungsabschnitt (110) ringförmig ausgeformt ist, wobei der erste Vorrichtungsabschnitt (110) zwischen einem ersten Teilbereich (222) und einem zweiten Teilbereich (224) des zweiten Vorrichtungsabschnitts (120) angeordnet ist.

4. Prüfsystem (300) gemäß einem der Ansprüche 1 bis 3, **dadurch gekennzeichnet, dass** die Auswerteeinrichtung (330) ausgebildet ist, um unter Verwendung der von dem zu prüfenden optischen System (OS) erzeugten Abbildung (340) der Vorrichtung (100) eine zweidimensional gemessene Modulationsübertragungsfunktion des optischen Systems (OS) als das Auswerteergebnis (360) zu bestimmen.

5. Prüfsystem (300) gemäß einem der Ansprüche 1 bis 4, **dadurch gekennzeichnet, dass** die Auswerteeinrichtung (330) ausgebildet ist, um unter Verwendung der von dem zu prüfenden optischen System (OS) erzeugten Abbildung (340) der Vorrichtung (100) eine effektive Brennweite und/oder eine richtungsabhängige Vergrößerungsfähigkeit des optischen Systems (OS) als das Auswerteergebnis (360) zu bestimmen.

6. Verfahren (600) zum Prüfen eines optischen Systems (OS), wobei das Verfahren (600) unter Verwendung eines Prüfsystems gemäß einem der Ansprüche 1 bis 5 ausführbar ist, wobei das Verfahren (600) folgende Schritte aufweist:
Erzeugen (602) einer Abbildung (340) der gesamten Vorrichtung (100) mittels des zu prüfenden optischen Systems (OS); und
Auswerten (604) der Abbildung (340) der Vorrichtung (100), um zum Prüfen des optischen Systems (OS) ein Auswerteergebnis (360) zu bestimmen.

7. Verfahren (600) gemäß Anspruch 6, **dadurch gekennzeichnet, dass** im Schritt (604) des Auswertens unter Verwendung der Abbildung (340) der Vorrichtung (100) eine zweidimensional gemessene Modulationsübertragungsfunktion des optischen Systems (OS) als das Auswerteergebnis (360) bestimmt wird.

8. Verfahren (600) gemäß Anspruch 7, **dadurch gekennzeichnet, dass** im Schritt (604) des Auswertens die zweidimensional gemessene Modulationsübertragungsfunktion aus einer Punktspreizfunktion (555) des optischen Systems (OS) ermittelt wird, insbesondere mittels einer Fourier-Transformation (350), wobei die Punktspreizfunktion (555) aus einer Mehrzahl von in unterschiedlichen Querschnittsebenen (A) erhaltenen Linienspreizfunktionen (545) des optischen Systems (OS) mathematisch bestimmt wird.

9. Verfahren (600) gemäß einem der Ansprüche 6 bis 8, **dadurch gekennzeichnet, dass** im Schritt (604) des Auswertens unter Verwendung der Abbildung (340) der Vorrichtung (100) eine effektive Brennweite und/oder eine richtungsabhängige Vergrößerungsfähigkeit des optischen Systems (OS) als das Auswerteergebnis (360) bestimmt wird.

## Claims

1. Test system (300) for testing an optical system (OS), wherein the test system (300) has the following features:
a device (100) for imaging through the optical system (OS) to be tested, wherein the device (100) comprises a first device portion (110) having a first transmittance for electromagnetic waves and a second device portion (120) having a second transmittance for the electromagnetic waves, wherein the second transmittance is higher than the first transmittance, wherein at least one of the device portions (110, 120) is ring-shaped; and an evaluation device (330),
**characterized in that**
one of the ring-shaped device portions (110, 120) is shaped as a slit or ring gap, wherein the evaluation device (330) is designed to evaluate an image representation (340) of the entire device (100) generated by the optical system (OS) to be tested, in order to determine an evaluation result (360) for the testing of the optical system (OS).

2. Test system (300) according to Claim 1, **characterized in that** the second device portion (120) is ring-shaped, wherein the second device portion (120) is arranged between a first partial region (112) and a second partial region (114) of the first device portion (110).

3. Test system (300) according to Claim 1, **characterized in that** the first device portion (110) is ring-shaped, wherein the first device portion (110) is arranged between a first partial region (222) and a second partial region (224) of the second device portion (120).

4. Test system (300) according to any of Claims 1 to 3, **characterized in that** the evaluation device (330) is designed to determine a two-dimensionally measured modulation transfer function of the optical system (OS) as the evaluation result (360) using the image representation (340) of the device (100) generated by the optical system (OS) to be tested.

5. Test system (300) according to any of Claims 1 to 4, **characterized in that** the evaluation device (330) is designed to determine an effective focal length and/or a direction-dependent magnification capability of the optical system (OS) as the evaluation result (360) using the image representation (340) of the device (100) generated by the optical system (OS) to be tested.

6. Method (600) for testing an optical system (OS), wherein the method (600) can be carried out using a test system according to any of Claims 1 to 5, wherein the method (600) comprises the following steps:
generating (602) an image representation (340) of the entire device (100) by means of the optical system (OS) to be tested; and
evaluating (604) the image representation (340) of the device (100) in order to determine an evaluation result (360) for the testing of the optical system (OS).

7. Method (600) according to Claim 6, **characterized in that** in step (604) of evaluating, using the image representation (340) of the device (100), a two-dimensionally measured modulation transfer function of the optical system (OS) is determined as the evaluation result (360).

8. Method (600) according to Claim 7, **characterized in that** in step (604) of evaluating, the two-dimensionally measured modulation transfer function is ascertained from a point spread function (555) of the optical system (OS), in particular by means of a Fourier transformation (350), wherein the point spread function (555) is mathematically determined from a plurality of line spread functions (545) of the optical system (OS) obtained in different cross-sectional planes (A).

9. Method (600) according to any of Claims 6 to 8, **characterized in that** in step (604) of evaluating, using the image representation (340) of the device (100), an effective focal length and/or a direction-dependent magnification capability of the optical system (OS) are/is determined as the evaluation result (360).

## Revendications

1. Système de test (300) destiné à tester un système optique (OS), le système de test (300) présentant les caractéristiques suivantes :
un dispositif (100) pour l'imagerie par le système optique (OS) à tester, le dispositif (100) comportant une première section de dispositif (110) avec un premier degré de transmission pour des ondes électromagnétiques et une seconde section de dispositif (120) avec un second degré de transmission pour les ondes électromagnétiques,
le second degré de transmission étant supérieur au premier degré de transmission, au moins l'une des sections de dispositif (110, 120) présentant une forme annulaire ; et
un dispositif d'évaluation (330),
**caractérisé en ce que**
l'une des sections de dispositif (110, 120) de forme annulaire est réalisée sous la forme d'une fente ou d'un interstice annulaire, le dispositif d'évaluation (330) étant conçu pour évaluer une image (340) de l'ensemble du dispositif (100) à tester, générée par le système optique (OS), afin de déterminer un résultat d'évaluation (360) pour tester le système optique (OS).

2. Système de test (300) selon la revendication 1, **caractérisé en ce que** la seconde section de dispositif (120) est de forme annulaire, la seconde section de dispositif (120) étant disposée entre une première zone partielle (112) et une seconde zone partielle (114) de la première section de dispositif (110).

3. Système de test (300) selon la revendication 1, **caractérisé en ce que** la première section de dispositif (110) est de forme annulaire, la première section de dispositif (110) étant disposée entre une première zone partielle (222) et une seconde zone partielle (224) de la seconde section de dispositif (120).

4. Système de test (300) selon l'une quelconque des revendications 1 à 3, **caractérisé en ce que** le dispositif d'évaluation (330) est conçu pour déterminer une fonction de transfert de modulation mesurée de manière bidimensionnelle du système optique (OS) en tant que résultat d'évaluation (360) à l'aide de l'image (340) du dispositif (100) générée par le système optique (OS) à tester.

5. Système de test (300) selon l'une quelconque des revendications 1 à 4, **caractérisé en ce que** le dispositif d'évaluation (330) est conçu pour déterminer une distance focale effective et/ou une capacité de grossissement en fonction de la direction du système optique (OS) en tant que résultat d'évaluation (360) à l'aide de l'image (340) du dispositif (100) générée par le système optique (OS) à tester.

6. Procédé (600) de test d'un système optique (OS), le procédé (600) pouvant être mis en œuvre à l'aide d'un système de test selon l'une quelconque des revendications 1 à 5, le procédé (600) comprenant les étapes suivantes :
générer (602) une image (340) de l'ensemble du dispositif (100) au moyen du système optique (OS) à tester ; et
évaluer (604) l'image (340) du dispositif (100) afin de déterminer un résultat d'évaluation (360) pour tester le système optique (OS).

7. Procédé (600) selon la revendication 6, **caractérisé en ce que**, lors de l'étape d'évaluation (604), une fonction de transfert de modulation mesurée de manière bidimensionnelle du système optique (OS) est déterminée en tant que résultat d'évaluation (360) à l'aide de l'image (340) du dispositif (100).

8. Procédé (600) selon la revendication 7, **caractérisé en ce que**, lors de l'étape d'évaluation (604), la fonction de transfert de modulation mesurée de manière bidimensionnelle est déterminée à partir d'une fonction d'étalement du point (555) du système optique (OS), en particulier au moyen d'une transformation de Fourier (350), la fonction d'étalement du point (555) étant déterminée mathématiquement à partir de plusieurs fonctions d'étalement linéaire (545) du système optique (OS), obtenues dans différents plans de section transversale (a).

9. Procédé (600) selon l'une quelconque des revendications 6 à 8, **caractérisé en ce que**, lors de l'étape d'évaluation (604), une distance focale effective et/ou une capacité de grossissement en fonction de la direction du système optique (OS) est déterminée en tant que résultat d'évaluation (360) à l'aide de l'image (340) du dispositif (100).
